# EUROPEAN PATENT APPLICATION

(11) **EP 1 705 305 A2**
(43) Date of publication of application: **27.09.2006**
(21) Application number: 06075639.2
(22) Date of filing: 20.03.2006
(51) Int. Cl.: E04C 3/29, E04C 3/07, E04B 1/24

(54) **Method of making members with a thermal break**

(30) Priority: 21.03.2005 US 84976
(71) Applicant: Yarrow Bay Industries, Inc., Kirkland WA 98033 (US)
(72) Inventor: Jensen, Gary L., Liberty Lake, Washington 99019 (US)
(74) Representative: 't Jong, Bastiaan Jacob

(57) **Abstract**

Method of forming members from thermally conductive components which have a gap therebetween. The gap is bridged and the conductive components integrated into a composite member by a reinforced polymer. This provides a thermal break which inhibits the flow of heat between the conductive components of the member. This construction also blocks the transfer of sound and other vibrations between the conductive components of the member. The construction also mitigates the formation of condensation on an artifact fixed to one of the components. After the gap is bridged with the reinforced polymer, the member may be punched with holes and roll formed.

## Description

### TECHNICAL FIELD OF THE INVENTION

The present invention relates to a method of making novel, improved members with features which inhibit the transfer of heat from one edge of the member to another. These features also inhibit the transmission of sound and other vibrations and mitigate the formation of condensate.

One important application of the principles of the present invention is found in the provision of heat and vibration transfer resistant structural members for steel framed buildings, and what follows will be devoted primarily to that application of the invention. It is to be understood that this is being done for the sake of clarity and convenience and is not intended to limit the scope of the appended claims.

### BACKGROUND OF THE INVENTION

Buildings and other structures with exterior walls, ceilings, floors, and/or roofs framed from steel components are ubiquitous because of the superior physical properties of steel vis-à-vis wood, concrete, and other building materials and because steel components commonly prove more economical because less material is used. One particularly significant disadvantage of such structural members is that they transfer heat from the interior of the building in which they are found to its exterior and in the opposite direction. Sound and other vibrations are transferred with equal facility.

This minimally inhibited transfer of heat is deleterious because it can result in the spreading of fire. And, in less severe instances, the transfer of heat through the steel members can result in an expensive loss of heat from the building in which they are found and/or can increase air conditioning costs by allowing the transfer of heat from the ambient surroundings to the interior of a building.

Different approaches to the problems dealt with in the preceding paragraphs have been proposed if not actually used. One is to configure a building component, in this case a stud, such that stagnant air pockets are formed between the exterior/interior edges of the stud and inner/outer panels covering the pocket-defining surfaces of the component. The just-described solution to the thermal isolation problem is disclosed in U.S. Patent No. 4,235,057 issued 25 November 1980.

The Executive Summary of the 1999 North American Steel Framing Alliance Business Plan (page 4A) suggests, in the abstract, the use of "greater thicknesses of cavity/wall insulation and/or exterior rigid board insulation to provide a thermal break." On page 9A of the Executive Summary, the authors recognize that there is a need for improved thermal performance. This need persists to the present day.

### SUMMARY OF THE INVENTION

A novel, cost effective solution to the heat transfer problem has now been discovered and is disclosed herein. Specifically, members embodying the principles of the present invention are composed of two (or more) components with a gap therebetween. This gap is spanned, and the components of the member joined in to a heat transfer resistant composite, with a thermally insulating, high strength, reinforced polymer. This inhibits the transfer of heat (or sound or other vibrations) from one component of the member to another. The result is a structural member which is strong and cost effective and which satisfactorily inhibits the transfer of heat and audible (and other) vibrations.

The reinforced, polymeric material may be bonded to the metallic elements of the structural member in any desired manner. For example, there are a number of sheet type adhesives which can be used for that purpose. The disclosed method provides an efficient and economical way to produce the member.

Other advantages of a member made using the principles of the present invention are:

The formation of condensate on artifacts attached to the members is inhibited;

The members can be spaced further apart in a wall, ceiling, roof, etc. than comparably employed members fabricated from a material such as wood (typically 24 ins. on center versus 16 ins. on center for wall studs, and 48 ins. versus 24 ins. on center for roof trusses);

Structural members as disclosed herein can be easily designed by conversion and extrapolation of the dimensions, shapes and other properties of structural members fabricated from materials such as wood;

In many instances involving roof trusses, the commonly employed plywood underlayment is not required;

The composite structural members are non-flammable when a fire retardant is employed, are in large part made of recyclable materials (such as steel), and do not give off toxic fumes when heated;

All radiuses are easily formed;

The herein disclosed members are lighter and stronger than many members of other materials and configurations; and they have superior resistance to seismic disturbances and to high winds, of which hurricanes are one example; also, they are resistant to condensation;

Such members don't shrink, rot, warp, creep, split, bow, buckle, twist, or creak under load; and they are immune to attacks by ants and other insects and vermin.

Because of the just-described properties, buildings employing these structural members typically may not require servicing to correct structural defects, and the costs of insurance may be lower;

Members embodying the principles of the present invention have a high degree of integrity, and construction of structures such as buildings is facilitated by such members;

Yet another advantage of the present invention is that its principles may easily be employed in products other than building components - for example, in turbine engine inlet filters.

Another advantage of the present invention is that batts and other preformed units of insulation can be used instead of the ubiquitous foamed and blown insulation although a foam or blown insulation can be employed if one so desires.

Also significant is the advantage of the method of the present invention which provides an economical and effective approach to manufacture of the members with a thermal break discussed in detail above.

The object, features, and advantages of the present invention will be apparent to the reader from the foregoing and the appended claims and from the accompanying drawings taken in conjunction with the accompanying description.

### BRIEF DESCRIPTION OF THE DRAWINGS

Fig. 1 is a partial perspective of a building framework; the framework has steel sills, studs, stud cap, ceiling joists, and rafters, all embodying the principles of the present invention;
Fig. 2 is a perspective view of a structural member which embodies the principles of the present invention and which can be employed in the framework of Fig. 1;
Figure 3 is a cross-sectional view of the structural member shown in Fig. 2;
Figure 4 is an exploded view of the Figs. 2 and 3 structural member;
Figs. 5-8 (and Fig. 4) illustrate different configurations of holes that may be provided in the member's components to reduce the weight of the member, to provide a way in which thermal insulation elements of opposite sides of the webs may be brought into contact to bond the two components together, to impede the transfer of heat and vibrations from one member component to another; and to impede the condensation of moisture;
Fig. 9 is an exploded view of a second embodiment of the invention in which a thermal plug is employed to provide a thermal break between two components of a member;
Fig. 10 is a section through the member depicted in Fig. 9;
Fig. 11 is a perspective view of yet another embodiment of the present invention; in this embodiment a fiber-reinforced thermal break with reinforcing strands oriented at right angles to the flow of thermal energy is employed to provide a thermal break between two elements of a structural member in accord with the principles of the present invention; this figure also shows an asymmetric, often preferred location of the thermal break between inner and outer edges of the member;
Fig. 12 is a section through the member of Fig. 11; this figure shows more clearly a preferred orientation of the reinforcing strands (or rovings) in a plug located in the gap between first and second components of the member;
Fig. 13 is a plan view of a structural member embodying the principles of the invention which is aperatured to accommodate pipes, electrical conduits, and the like;
Fig. 14 is a perspective view of the Fig. 13 component; and
Fig. 15 is a schematic view of a line for manufacturing a preform of a structural member embodying the principles of the present invention.
Fig. 16 is a schematic view of a line for manufacturing a preform of a structural member embodying the principles of the present invention having the cutting step after the roll-forming step.
Fig. 17 is a schematic view similar to Figs. 15 and 16 but additionally showing a rotary punching system.
Fig. 18 is a partial schematic view similar to Figure 17 and showing view lines A-A, and sectional lines B-B and C-C.
Fig. 19 shows sectional views through lines B-B and C-C of Fig. 18.
Fig. 20 shows a top view from lines A-A of Fig. 18

### DETAILED DESCRIPTION OF THE INVENTION

The discussion which follows deals with multiple embodiments of the invention. To the extent that components of these embodiments are alike, they will be identified by the same reference characters.

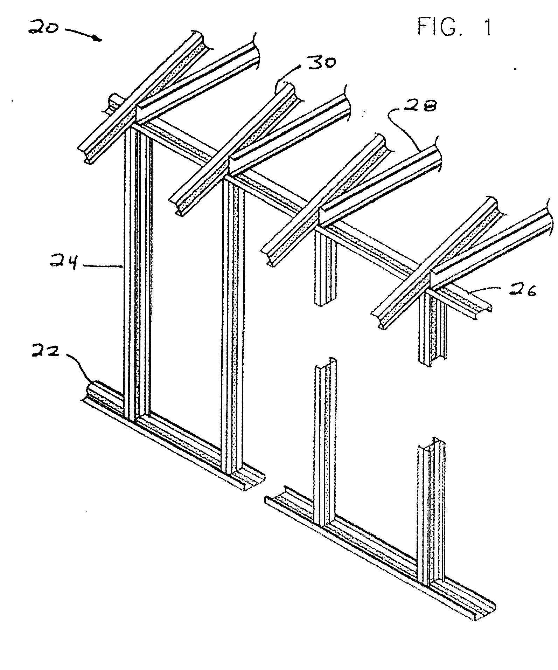

Referring now to the drawings, Fig. 1 depicts a steel building framework 20. This framework is made up of a sill 22, vertical studs 24, and a top plate 26, or cap, supporting ceiling joists 28 and rafters 30. Framework components 22, 24, 26, and 30 embody, and are constructed in accord with, the principles of the present invention; and rafters 28 may be so constructed as to embody those principles.

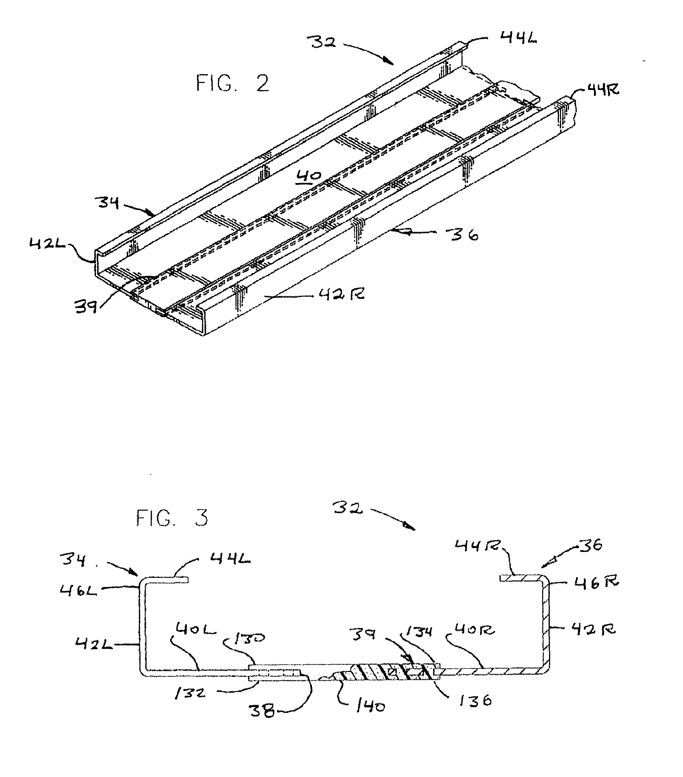

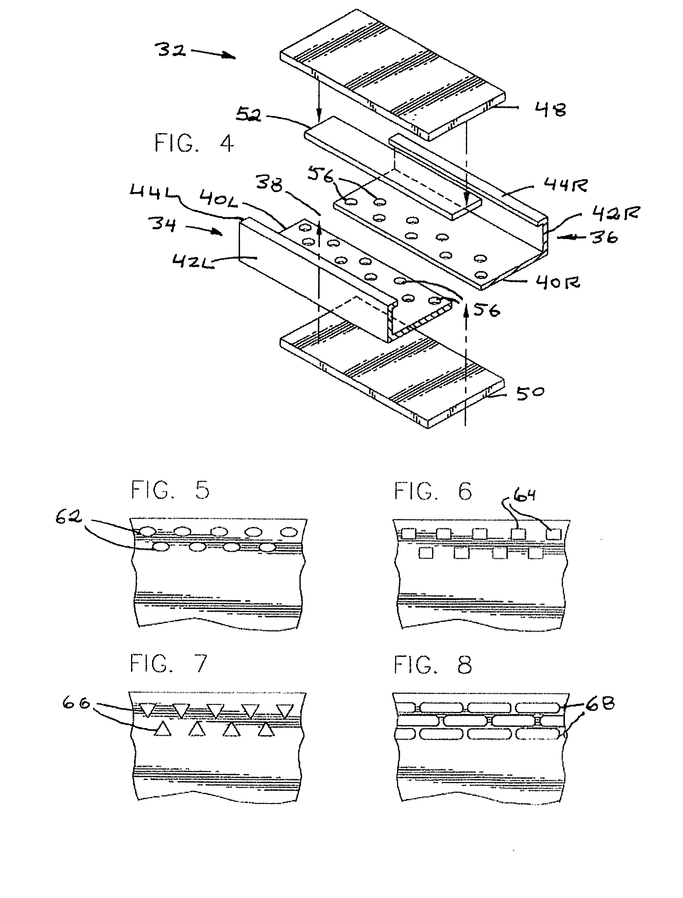

A representative one of the structural components depicted in Fig. 1 is illustrated in Figs. 2 and 3 and identified by reference character 32. Structural member 32 has two substantially identical, mirror image-related, thermally conductive, vibration transmitting (typically steel) components 34 and 36 with a gap 38 therebetween. A third insulating component 39 spans this gap, integrating the components 34 and 36 into an integral structure and providing a thermal break between components 34 and 36. This break minimizes the flow of heat between components 34 and 36. It also attenuates sound and other vibrations and makes panels or other artifacts attached to structural number 32 less susceptible to condensation.

As indicated above, the configuration and other characteristics of the two structural number components 34 and 36 are essentially identical. Therefore, in the ensuing description of those components, common features will be for the most part identified by the same reference characters with the suffixes L and R being employed to identify the left-hand and right-hand components 34 and 36 of structural member 32 with that member oriented as shown in Figs. 2 and 3.

As shown in Figs. 2 and 3, each of the components 34 and 36 has a flat, web-forming segment 40, an integral flange segment 42 oriented at right angles to element 40, and an also integral, inturned lip 44 extending at right angles from the exposed edge 46 of flange 42.

The insulating component 39 of structural member 32 is fabricated from two separate layers (or pads) 48 and 50 of an insulating material. In the manufacture of a representative structural member 32, these elements are fused together into a single entity (component 39) which is located in the gap 38 between the web-forming segments 40L and 40R of components 34 and 36 and laps onto the web-forming elements 40L and 40R of components 34 and 36.

At the present time, the preferred insulating material is TWINTEX, a material woven from multistrand rovings of a polypropylene and glass fibers. TWINTEX is available from Vetrotex America, Maumee, Ohio.

TWINTEX is an effective thermal insulator. It also has the advantage of being stronger than steel. Therefore, the strength of a structural member is not reduced by using that material to bridge the gap between adjacent components of that member. The TWINTEX material is 30 to 40 percent polypropylene and 70 to 60 percent fiberglass reinforcement.

The reinforcing glass fibers of the composite materials described above conduct heat to some extent. Consequently, it may be advantageous to fill the gap between the two components of a structural member as disclosed herein with a material which does not contain glass or other thermally conductive components. Urethane foams useful for this purpose are available from a variety of manufacturers. Such a strip is employed in structural member 32. This strip is shown in Fig. 4 and identified by reference character 52.

As shown in Fig. 4, holes (identified by reference character 56) may be punched or otherwise formed in the apposite segments 40L and 40R of the two components 34 and 36 of structural member 32. In the manufacture of the structural member, components 34 and 36 and the thermal insulation component 39 are heated to a temperature at which the polymeric constituent of the break-providing thermal barrier material 39 flows in a manner akin to that of a high viscosity fluid into the aperture 56 along with the fibers embedded in that constituent of the insulating material. This creates multiple bonds between the two layers 48 and 50 of the fiber-reinforced thermoplastic material shown in Fig. 4, anchoring the two layers to each other and to the component segments 40L and 40R. These holes may be round (Fig. 4), elliptical (reference character 62 in Fig. 5) or, in many instances, may more effectively be of a polygonal configuration such as those square holes identified by reference character 66 in Fig. 7. Another effective hole shape is the raceway configuration identified by reference character 68 in Fig. 8. Other configurations may, of course, be employed.

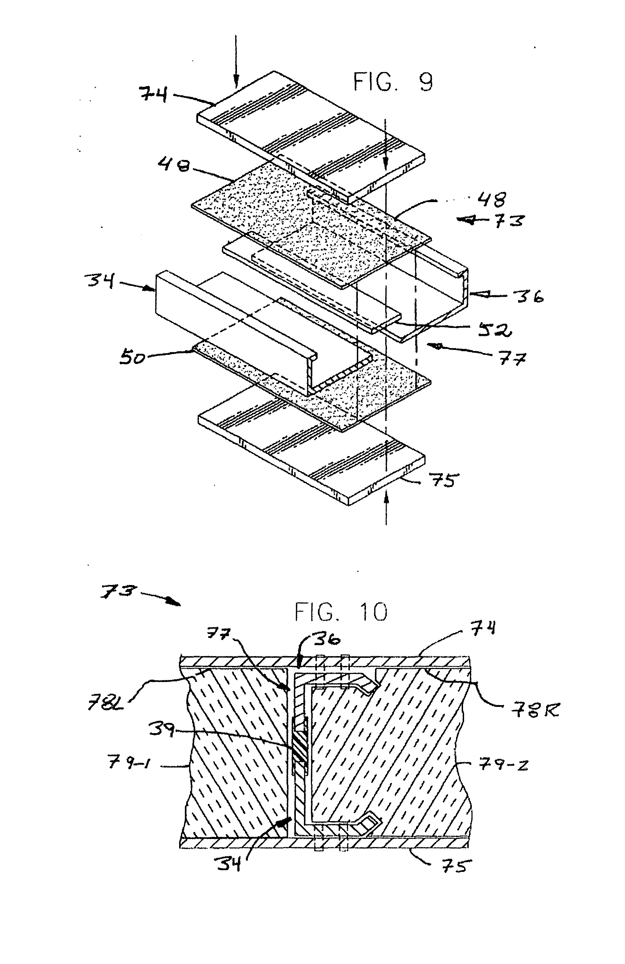

Continuing with these drawings, Figs. 9 and 10 depict, in fragmentary form, an installation 73 in which exterior and interior panels 74 and 75 are attached to opposite edges of a structural member 77 embodying the principles of the present invention. The arrangement shown in Figs. 9 and 10 has the advantage that the spaces such as 78L and 78R between exterior and interior panels 74 and 75 can be filed with batts and other modules of insulation identified by reference characters 79-1 and 79-2 in Fig. 10. Of course, these spaces can instead be filled by blowing the insulation into spaces such as 78 and 79 or by foaming the insulation in those spaces, etc.

Referring still to Fig. 10, another advantage of the structural members disclosed herein is that when temperatures fall, the transfer of heat from interior panel 74 to exterior panel 75 is significantly impeded. The result is that under many, if not all, conditions, the condensation of moisture (or sweating) on interior panel 74 is significantly reduced, if not entirely eliminated.

Irrespective of the shape of the openings, they are preferably arranged in two staggered rows to reduce the transfer of thermal energy from one structural member component to another. This lengthens the paths along which thermal energy and vibrations are conducted, decreasing the ability of the structural member components in which the anchoring holes are formed to transfer thermal energy and vibrations.

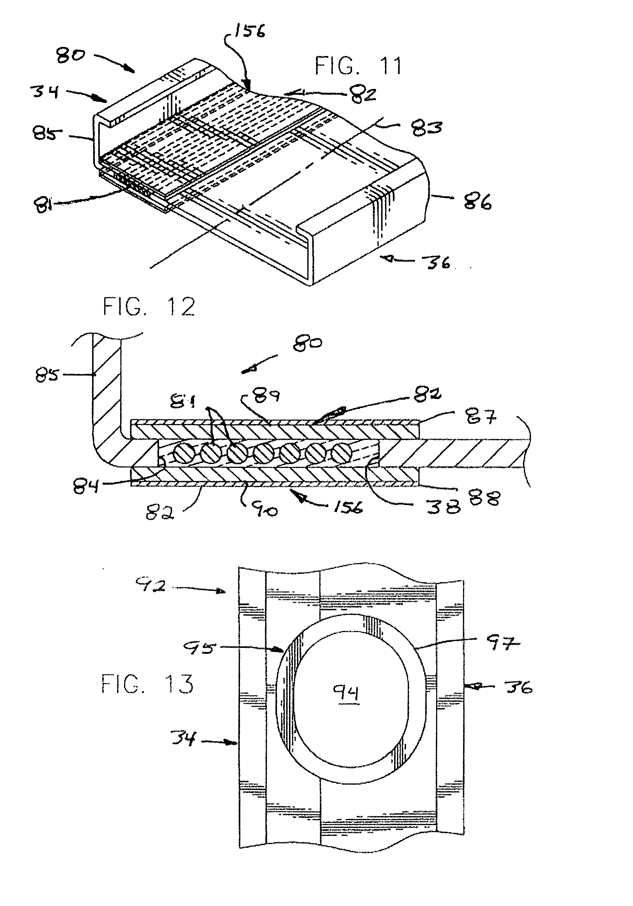

Figs. 11 and 12 depict a structural member 80 which embodies the principles of the present invention and in which the transfer of heat from one to the other of the two structural member components 34 and 36 is inhibited by orienting the parallel strands 81 of insulating material 82 in the gap 38 between the apposite edges 39L and 39R of structural component segments 40L and 40R at right angles to the longitudinal axis 83 of structural member 80. As discussed above, the transfer of thermal energy from one to the other of the structural member components 34 and 36 spanwise of the element 81 is significantly slower than the transfer of heat lengthwise of those elements. Therefore, the Figs. 11 and 12 strand orientation is preferred for insulating materials which have only (or a considerable portion) parallel strands.

Structural member 80 also has layers (or on coatings) 87 and 88 of fire retardant on the exposed faces 89 and 90 of thermal barrier component 82. A fire retardant is used when the polymeric material of the insulation material is not flame proof.

As discussed above, superior performance can often be obtained by locating the thermal break-providing gap and insulation closer to an exterior wall end of the structural member than the inner wall. A structural member of the character just described is the structural member 80 illustrated if Figs. 11 and 12. The thermal break gap 84 of structural member 80 is much nearer to the exterior wall supporting face 85 of structural member component 34 than it is to interior wall supporting face 86 of structural member 36.

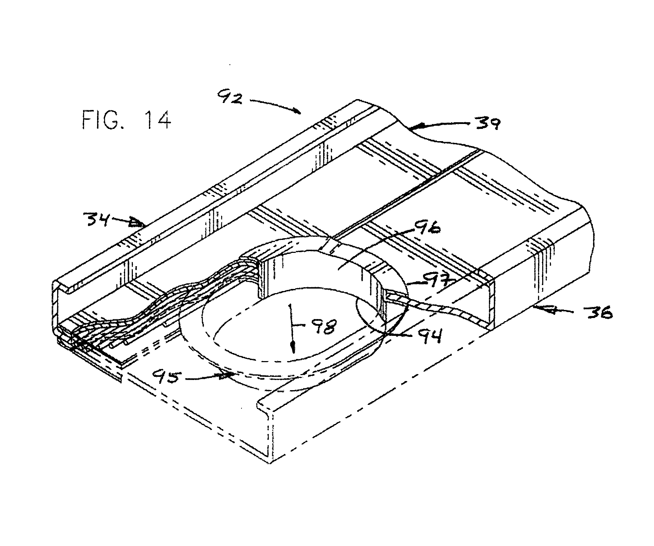

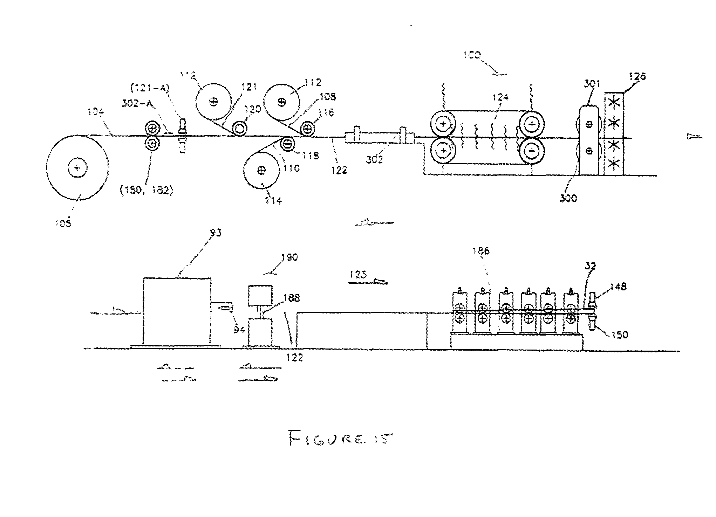

As discussed above, it is conventional for pipes, electrical conduits, pipes, and the like to be routed through the structural members of a building's framework. A structural member with an opening provided for this purpose is depicted in Figs. 13 and 14 and identified by reference character 92. As is best shown in Fig. 14, the hole 94 provided for the purposes just described is formed in any convenient fashion through the structural member components 34 and 36 and the third thermal break-providing component 39 of structural member 32 of Fig. 10. As best shown in Fig. 14, a bushing 95 having a cylindrical barrel 96 and an integral, radially extending lip or flange 97 may optionally be installed in the opening 94 with the flange 97 of the bushing locating the bushing in the arrow 98 direction relative to the thermal break-providing component 39 of the structural member. This bushing adds to the structural member strength that may be lost by forming the necessarily fairly large hole in the structural member. Also, the insert isolates elements threaded through and in the hole from the usually rough edges of the hole, thereby protecting such elements from damage.

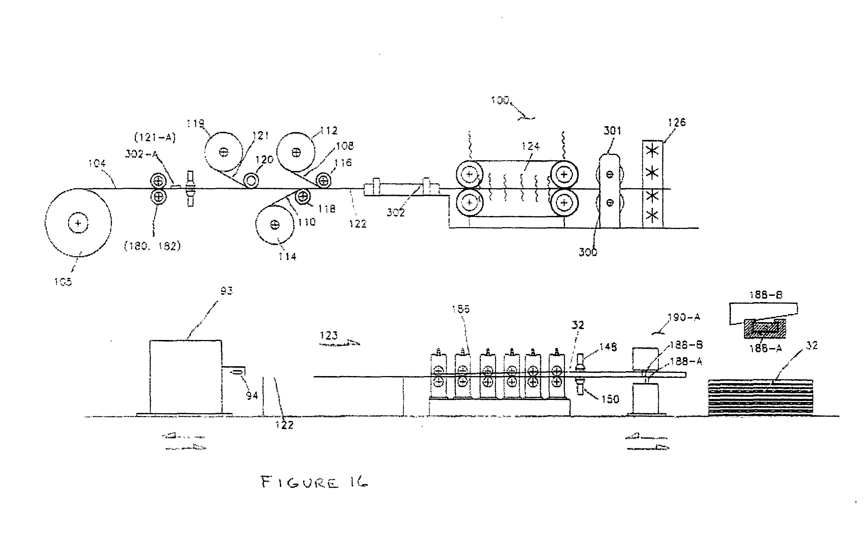

Referring to the Fig. 15, the method of manufacturing a structural member with a thermal break in accordance with the present invention can be described. Fig. 15 shows a manufacturing line 100 moving in the direction shown by arrow 123. Fig. 15 shows a master coil 105 which dispenses a strip of metal, preferably steel, therefrom. The strip 104 is fed to a pair of slitters or knives 180 and 182 which slit the steel from master coil 105 into two portions lengthwise, while driving those portions forward in the manufacturing line 100. Guides 302A and guides 302 (farther downstream) are used to set and maintain a predetermined gap between the two portions. Before the slitted strip 104 enters the guides 302, thermal insulation (such as TWINTEX) 108 from unwind roll 112 is placed on the top surface of the two portions of the strip 104 covering the gap between the two portions. In a similar manner, thermal insulation 110 from unwind roll 114 is fed to the bottom surface of the two portions of strip 104 covering the gap being set by guides 302. Idler rolls 116 and 118 facilitate the placement of insulation 108 and 110, respectively, on strip 104. Immediately prior to the thermal insulation 108 and 110 being applied to the top and bottom of strip 104, an adhesive film is applied to the top and bottom sides of strip 104. This adhesive film is sandwiched between the strip 104 and thermal insulation 108 and 110 on the top and bottom sides of strip 104 and serves to ultimately bond the insulation 108 and 110 to the strip 104.

For the sake of clarity, only one of the adhesive film supply arrangements is shown. This supply arrangement comprises unwind roll 119 and idler roll 120. The adhesive film is identified by reference character 121.

It should be noted that as an alternative to slitting a single roll of metal strip 104 into two portions, two separate rolls (not shown) of metal strip could be used. The gap between the two separate strips from the two rolls would be set by guides 302A and guides 302. This arrangement is not shown but can be readily appreciated. The method previously and subsequently described would be directly applicable under this configuration.

At this point, a sandwich 122 of two thermal insulation strips 108 and 110, two adhesive films 121, and steel strip 104 is created. This sandwich is then fed to a belt type heating unit 124. In heating unit 124, the adhesive films (only one of which, numeral 121, is depicted) are heated to a temperature high enough for the adhesive to bond the strips of thermal insulation 108 and 110 to the opposite sides of steel strip 104.

As an alternative to applying adhesive films 121 from unwind roll 119 to the strip 104, adhesive could be sprayed from a sprayer 121A upstream of the application of the thermal insulation 108 and 110. The sprayer 121A could spray either or both sides of the strip 104.

In this newly formed sandwich 122, the polymeric matrix of the thermal insulation strips softens and is displaced along with its component of reinforcing fibers into the gap between the two components 34 and 36 of the structural element 32 as shown in Fig. 3. The result is an H-section thermal break-providing body of insulation. The edge segment of structural member element 40L is captured (or encapsulated) by two legs 130 and 132 of the insulating material. The other two legs 134 and 136 of the insulating material encapsulate complementary structural component element 40R and the insulation material in the bar 134 of the H fills the gap 39 between the two structural component elements 40L and 40R (see Fig. 3).

Referring back to Fig. 15, the sandwich 122 of bonded together insulating and steel members 104, 108, and 110 and adhesive 121 (or sprayed-on adhesive from sprayer 121A) then passes to cooling unit or chiller 126 downstream of heating unit 124. Here the polymeric matrix of the fused together layers of steel and thermal insulating material is cooled to solidify and permanently bond the insulating layers to the metallic substrate. The sandwich 122 is pinched between laminator rolls 300 and 301 as it exits the heater 124 to further assist in bonding.

At this point, it should be mentioned that the length of the unwound strip 104 (now a component in sandwich 122 described above) is monitored with respect to length in a well known manner by a computer control system and encoder. This monitoring of length is important as sandwich 122 is now fed to punch press 93 which punches holes 94 into the strip 104 at predetermined locations, depending on the application. These holes 94 are also shown in Figs. 13 and 14. Punching of holes 94 is done by punch press 93 and can be done with a stoppage of the processing line in a stationary manner or "on the fly", meaning that the processing line can continually run as the holes 94 are punched. The sandwich 122 with a punched hole therein is now fed to a cutting station 190 having a cutting blade 188 which cuts the sandwich 122 having the thermal insulation bonded thereto and a hole therein into predetermined lengths. At this point in the process, the sandwich 122 is substantially flat and delivered to a roll former 186 where flanges and return lips are produced with the exiting product from the roll former 186 similar to structural member 32 as depicted in Fig. 3. As the now formed member 32 exits the roll former 186, fire retardant can be applied to the upper and lower surfaces of the member 32 from nozzles 148 and 150. The fire retardant can be, for example, antimony trioxide.

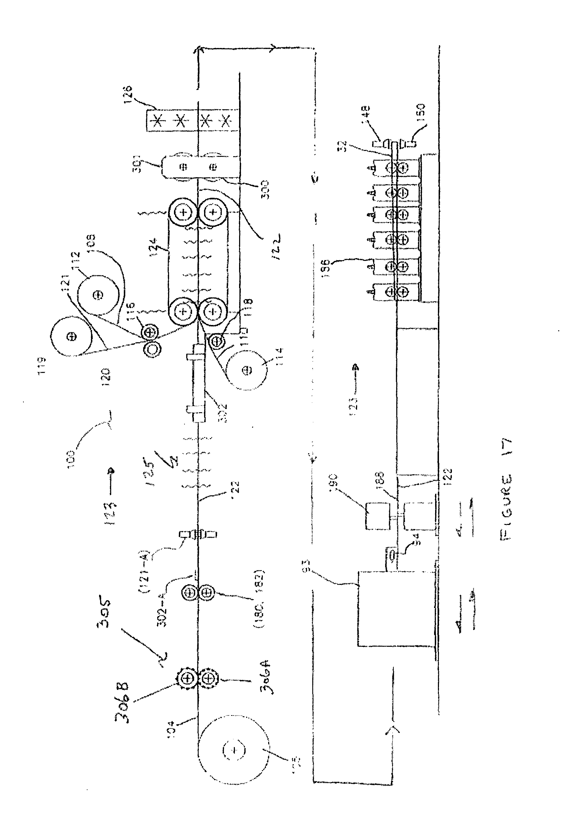

As an alternative to cutting the sandwich 122 into predetermined lengths at cutting station 190 and subsequently roll forming it in roll former 186, the sandwich can be roll formed and then cut. Fig. 16 shows this alternative arrangement. The cutting station 190A (Fig. 16) is placed after the roller former 186. In this application, the cutting blade 188A would be profiled.

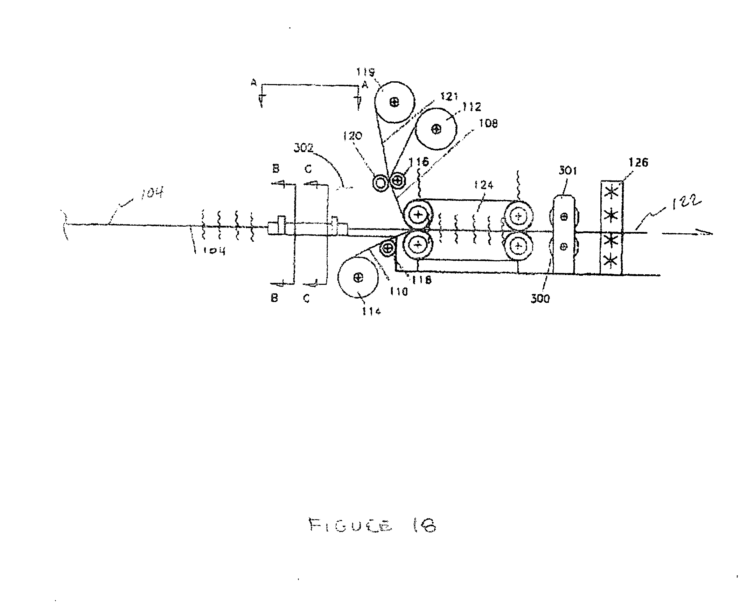

Another alternative in the manufacture of the thermal structural member is to punch holes or apertures in the opposite marginal edges of strip 104 as it is fed to the processing line. Fig. 17 shows a rotary punching system 305 which can be used for this purpose. Rotary hole punches 306A and 306B punch holes or apertures (which can be seen in Figs. 4 through 8) in the opposite marginal edges of the strip 104. A variety of patterns can be used as discussed previously and shown in these figures. The main purpose is to allow the insulation material after application and heating to flow in a manner similar to a high viscosity fluid into the holes along with the fibers embedded in a component of the insulating material. The net effect, as discussed previously, is a superior bonding of the insulating material 108 and 110 to the strip 104. After punching the holes, the strip 104 itself can be pre-heated in a conventional way by a pre-heater 125 to facilitate further the superior bonding.

For some applications, the application of the thermal insulation to only one side of the structural member components may be sufficient. Such a finished member can be manufactured on a line as illustrated in Figs. 15-17 with the bottom side thermal insulation unwind roll 114 inactivated or deleted.

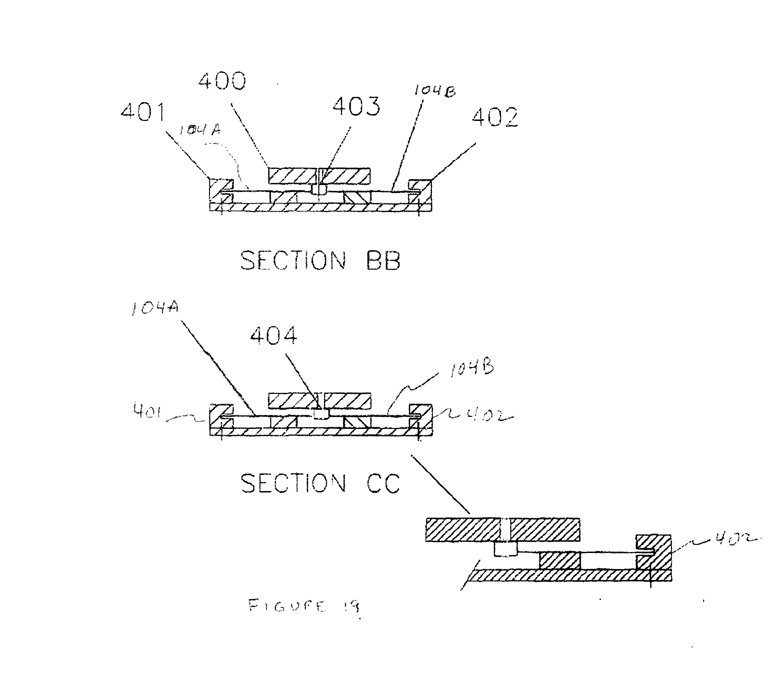

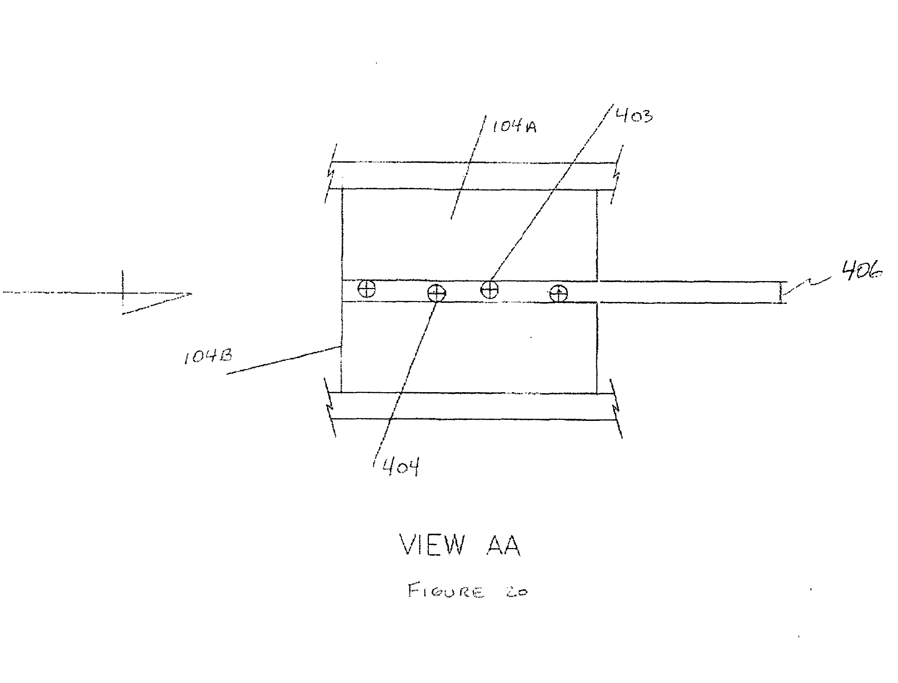

Referring now to Figs. 18-20, a guide system 302 for maintaining the gap between the first and second component of the strip 104 can be described. The guide system 302 is incorporated to the entry side of the laminating system of the present invention as best shown in Fig. 18. Now referring specifically to Figs. 19 and 20, guide system 302 has an overhead cam support plate 400 which carries offset cam rolls 403 and 404. Referring to Fig. 20, it can be seen that cam roll 403 abuts the inside edge of one portion of the strip 104B. Cam roll 404 abuts the inside edge of the other portion of the strip 104A. The gap between the two strips is shown as reference numeral 406. The number of cam rolls 403 and 404 can vary, depending on the application. At least two abutting each side of the strip portions 104A and 104B is preferred, and as many as eight could be provided. Guide side blocks 401 and 402 work in cooperation with the cam rolls 403 and 404. The support blocks 401 and 402 assure that the outside width of the strip portions 104A and 104B is maintained as best shown in the views of Fig. 19, both during and after the laminating process. Section CC of Fig. 19 shows cam 404 rollingly engaging the inside edge of strip 104B while block 402 controls the outside edge of the strip 104B, thereby maintaining width, accuracy, and parallelism. An exit guide (not shown) could also guide the sandwich 122 as it exits the laminating process. Edge blocks similar to those shown in the views of Fig. 19 could be used with adjustments to and away from the outside edges of the sandwich 122 allowing for various widths of sandwich 122 to be produced.

The reader will be aware that there are many applications in which the principles of the present invention may be employed to advantage in addition to those named above. For example, the material from which the structural member core is formed need not be steel, but may instead be brass, copper, or another alloy or metal or a non-metallic material, and the thermal barrier may be formed from a material other than the fiber reinforced polymeric material and polyurethane foam described above. Therefore, the presented embodiments of the invention are to be considered in all respects as illustrative and not restrictive, the scope of the invention being indicated by the appended claims rather than by the foregoing description; and all changes which come within the meaning and range of equivalency of the claims are therefore intended to be embraced therein.

## Claims

1. A method of manufacturing a member capable of blocking the transfer of heat and vibrations from a first to a second side of the member, said member having a web comprising the steps of:
a) arranging an assembly of first and second conductive components of said web in side-by-side relation with a gap between complementary surfaces of said first and second conductive components;
b) guiding said first and second conductive components so that said gap between said complementary surfaces of said first and second conductive components is maintained prior to bonding an insulation material to said first and second conductive components;
c) bonding an insulation material having an upper and lower side capable of inhibiting the transfer of heat between said components in gap spanning relationship to the first and second components to form a thermal break between said first and second conductive components and to form a unitary assembly of said first and second conductive components and the insulation material; and
d) applying a fire retardant to at least one side of the insulation material.

2. The method of claim 1 wherein cam rolls abut the first and second conductive components so that said gap between said complementary surfaces of said first and second conductive components is maintained prior to bonding said insulation material to said first and second conductive components.

3. The method of claim 1 which includes cooling the unitary assembly of said first and second conductive and said insulation material after bonding.

4. The method of claim 1 which includes feeding said unitary assembly of said first and second conductive components and said insulation material through laminator rolls after bonding.

5. The method of claim 4 which includes punching said unitary assembly with holes at predetermined locations after bonding.

6. The method of claim 4 which includes cutting said unitary assembly at predetermined lengths after bonding.

7. The method of claim 4 which includes roll forming said unitary assembly after bonding.
